# EUROPEAN PATENT SPECIFICATION

(11) **EP 3 858 574 B1**
(45) Date of publication and mention of the grant of the patent: **03.05.2023**
(21) Application number: 21152471.5
(22) Date of filing: 20.01.2021
(51) Int. Cl.: B29C 45/14, B29D 35/00

(54) **MANUFACTURING PROCESS OF A MOLDED PAINTED PRODUCT**
VERFAHREN ZUR HERSTELLUNG EINES GEFORMTEN LACKIERTEN PRODUKTS
PROCÉDÉ DE FABRICATION D'UN PRODUIT MOULÉ PEINT

(30) Priority: 29.01.2020 IT 202000001657
(43) Date of publication of application: 04.08.2021
(73) Proprietor: Four System Group Srl, 62010 Montelupone (MC) (IT); Frasson Tech Soles S.r.l., 35018 San Martino di Lupari (PD) (IT)
(72) Inventor: TROVARELLI, Michela, 62010 Montelupone (MC) (IT); ARICIU, Ion, 24060 Gorlago (BG) (RO)
(74) Representative: Cutropia, Gianluigi

(56) References cited:
- WO-A1-2009/065445
- US-A1- 2007 275 248

## Description

The present invention relates to a manufacturing process of a molded painted product, and particularly a footwear sole.

Although the following description refers to a footwear sole, the present invention will refer to any type of product, such as apparel, interior decoration articles or items of everyday use that are molded from plastic materials and painted.

Generally speaking, footwear soles are molded from a plastic material, such as polyurethane foam. After molding, the sole is transferred to a painting station and is painted with paint in order to obtain the desired colors and decorative patterns. Evidently, such a process is complicated and expensive because of the step of painting that is to be carried out on a 3D product, such as a sole.

In order to find at least a partial solution to such a drawback, plastic sheets are used, which are processed with silk screen-printing with ink, pad printing or photographic impression or water transfer printing. The silk-screened sheet is disposed in the mold where the plastic material is injected/poured, in such a way that the side of the silk-screened sheet remains on the exterior of the sole and the silk-screen printing is visible. In this way, the step of painting is avoided.

However, this type of soles with silk-screened sheets is impaired by some drawbacks due to the fact that the silk-screen printing with ink generates a poor aesthetics and does not meet the necessary requirements because the market requires soles that are painted with paint in order to give a pleasant aesthetics to the soles.

Moreover, the soles obtained with silk-screened sheets are impaired by the fact that they are very delicate. As a matter of fact, an abrasion of the external surface of the sole or a contact of the external surface of the sole with a corrosive agent will scratch the silk-screening, irremediably damaging the decorative patterns of the sole. Even a simple washing operation or a contact with water can determine a rapid deterioration of the silk-screen printing.

Moreover, it must be noted that the plastic material used for molding the soles, such as polyurethane foam, does not expand uniformly in the mold and the external surface of the polyurethane foam is generally irregular with surface deformations, such as cracks, depressions and craters that impair the aesthetics of the sole. In this case also, the use of a silk-screened sheet does not improve the surface finish of the polyurethane foam. In fact, because of its low thickness (less than 1 mm), the silk-screened sheet adheres to the surface deformations of the polyurethane foam, which remain visible.

In view of the above, the manufacturing process of a sole according to the prior art generally provides for using a sheet that is arranged in the mold where the polyurethane foam is injected, in such a way to compact the polyurethane foam and reduce the waste; successively, such a type of sole is transferred to a painting station in order to be painted with polyurethane paints. Evidently, as mentioned above, said process is impaired by the following drawbacks:
- difficulties encountered in painting a 3D product, such as a sole;
- realization of an extremely delicate sole, wherein the paint is exposed on the exterior, and can be rapidly damaged and deteriorated;
- presence of surface deformations of the polyurethane foam, which remain visible.

US2007/275248 discloses a method for making a product that provides for forming a patterned layer on the first surface of the substrate by printing; forming a hard coated layer on the second surface of the substrate by a hard coating method and hot pressing the film by a hot press forming method.

US2010/291329 disclosed a method for realizing a mold label from a polymeric or cellulosic carrier base film having a first decorative surface and a second, backing surface.

WO2009/065445 discloses an in-mould label comprising a polymeric or cellulosic carrier base film having a first decorative surface and a second backing surface, said label comprising a pattern printed on said first decorative surface, said printed first surface being laminated with a transparent protective top film affixed thereto by means of an adhesive, the printed pattern being visible through said transparent protective top film.

The purpose of the present invention is to eliminate the drawbacks of the prior art by disclosing a manufacturing process of a molded, painted product that is practical, versatile, inexpensive and easy to make.

Another purpose is to provide a manufacturing process of a molded, painted product that can reduce or eliminate surface imperfections and provides an aesthetically pleasant product that meets the market requirements.

These purposes are achieved according to the invention with the characteristics of the independent claim 1.

Advantageous embodiments of the invention appear from the dependent claims.

The manufacturing process of a molded, painted product according to the invention is defined in claim 1.

Additional features of the invention will be manifest from the following description, which refers to a merely illustrative, not limiting embodiment, as shown in the appended figures, wherein:
Figs. 1, 2, 3 and 4 are diagrammatic views of the steps of the manufacturing process of a molded painted product according to the invention;
Fig. 5 is a perspective view of a molded painted product in the form of a footwear sole, coming out of the mold;
Fig. 6 is a perspective view of the sole of Fig. 5 after trimming the waste material;
Fig. 7 is a cross-sectional view taken along the plane VII-VII of Fig. 6;
Fig. 8 is an exploded cross-sectional view as Fig. 2 that shows a variant of the process according to the invention.

With reference to the Figures, the manufacturing process of a molded painted product according to the invention is described.

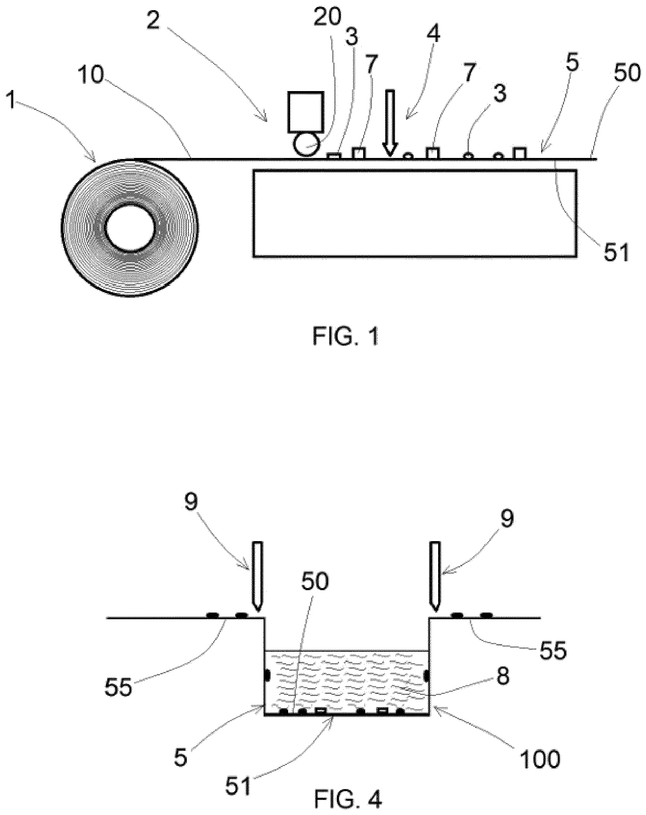

With reference to Fig. 1, a reel (1) is provided, wherein a film (10) of transparent plastic material is wound. For illustrative purposes, the film (10) can be transparent polyethylene and can have a maximum thickness of 1 mm.

The film (10) is fed towards a painting station (2) wherein painted is performed with paints, such as polyurethane and/or acrylic paints, in such a way to apply a layer of paint (3) on a side of the film (10).

The layer of paint (3) can comprise strips, spots, a uniform layer, or irregular patterns and can have only one color or several different colors. The layer of paint (3) can comprise words, logos and trademarks.

For illustrative purposes, the layer of paint (3) can have portions with a thickness equal to or higher than 0.5 mm.

The painting operation can be performed with a painting device (20), such as a roller or a sprayer, or with a brush, a pad and the like, or with any other tool capable of depositing the paint, where necessary.

Advantageously, decorative elements (7), such as strass, studs, metal strips and the like, can be applied on the side of the film (10) with the layer of paint (3).

After being painted, the film (10) is cut with a cutting device (4), such as a blade, in order to obtain sheets (5) with suitable dimensions for the mold wherein the product is to be molded.

Each sheet (5) has a first side (50) with the layer of paint (3) and eventually with the decorative elements (7), and a second side (51) without paint and without decorative elements.

Evidently, the film (10) can be cut in transparent sheets and the transparent sheets can be painted on one side, in such a way to obtain the sheet (5) with the layer of paint (3) on the first side (50). In this case, for example, a first sheet can be painted on one side with the painting device (20) and then, when the paint is still humid, a second sheet is applied on the painted side of the first sheet in such a way that the second sheet receives the paint from the first sheet. In view of the above, the decorative patterns of the first sheet are perfectly specular to the decorative patterns of the second sheet. The provision of two decorated sheets with perfectly specular patterns is extremely useful to obtain symmetrical copies of products, such as a pair of footwear soles.

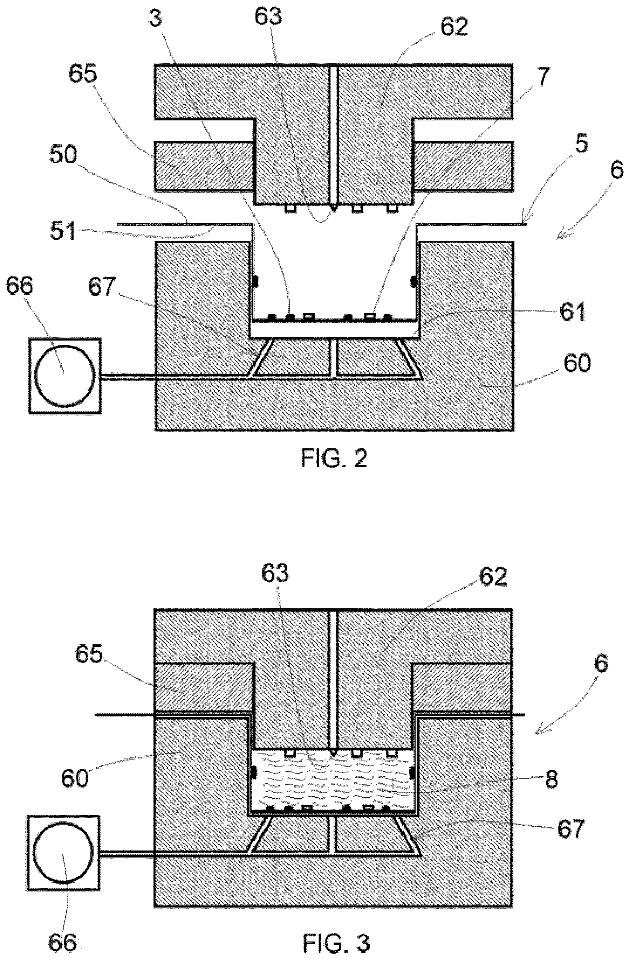

With reference to Fig. 2, when the sheets (5) are realized and the layer of paint (3) has dried, the sheets (5) are fed to a molding station (6). The molding station (6) comprises:
- a mold (60) with a cavity (61) suitably dimensioned for the product to be obtained,
- a film-fixing ring (65) suitable for fixing the sheet (5) on the mold (60) around the cavity (61) of the mold, and
- a lid (62) suitable for closing the mold (60)
- an air extraction system (66) in communication with conduits (67) obtained in the mold (60) that provide communication with the cavity (61) of the mold in order to extract the air from the cavity and generate vacuum.

The plastic material can be injected in the cavity (61) of the mold by means of an injection nozzle (63) or the plastic material can be poured in the cavity (61) of the mold. For illustrative purposes, in Figs. 2 and 3, the lid is provided with the injection nozzle (63).

When the mold is open (i.e. the mold (60), the film-fixing ring (65) and the lid (62) are separate), the sheet (5) is arranged in the cavity of the mold with the second side (51) without layer of paint directed towards the cavity (61) of the mold. The first side (50) of the sheet with the layer of paint (3) is directed upwards and a peripheral section of the sheet comes out of the cavity (61) of the mold.

With reference to Fig. 3, the film-fixing ring (65) is closed in order to fix the peripheral portion of the sheet (5) on the mold (60) around the cavity (61) of the mold and vacuum is generated in the cavity of the mold by means of the air extraction system (66). In this way, the second side (51) of the sheet without the paint abuts and adheres to all surfaces of the cavity (61) of the mold. The first side (50) of the sheet with the layer of paint (3) remains visible, while waiting for being covered with the plastic material.

Now, in case of molding by pouring, the plastic material (8) is poured in the cavity (61) of the mold and the lid (62) is closed.

In case of injection molding, the lid (62) is closed and the plastic material is injected in the cavity (61) of the mold by means of the injection nozzle (63).

In both cases, the plastic material (8) will adhere to the first side (50) of the sheet with the layer of paint (3), and eventually the decorative items (7).

The air extraction for the generation of vacuum can be performed during or after the step of pouring or injection.

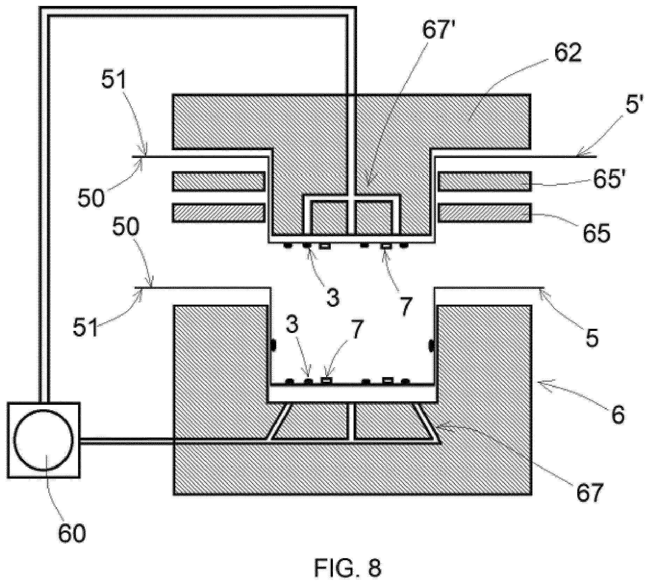

With reference to Fig. 8, a second sheet (5') of transparent plastic material with a first side (50) and a second side (51) can be provided, wherein the first side (50) of the second sheet has been painted by applying a layer of paint (3).

The second sheet (5) is arranged on the lid (62) of the mold with the second side (51) of the second sheet without the layer of paint (3) facing the lid (62) of the mold.

The second sheet (5') is held on the lid (62) of the mold by means of a second film-fixing ring (65').

The air extraction system (66) is in communication with conduits (67') that are provided in the lid of the mold and end in the surface of the lid where the second sheet (5') is arranged. In view of the above, the air can be extracted from the lid (62) of the mold for the generation of vacuum in such a way that the second side (51) of the second sheet without the layer of paint (3) adheres to the lid of the mold.

In such a case, the plastic material is poured in the cavity of the mold. In fact, injection cannot be performed because the injection nozzle would perforate the second sheet (5').

In this case also, the step of extracting can be performed before, after or during the step of pouring.

In view of the above, with the molding system of Fig. 8, the 3D surface of the sole can be completely covered with the layer of paint (3) of the two sheets (5, 5').

The plastic material (8) can be:
- a thermoplastic material, such as polyvinyl chloride (PVC), thermoplastic rubber (TR) and thermoplastic polyurethane (TPU);
- a bi-component polyurethane material, such as polyurethane rubber (PUR) with polyether and polyester;
- a copolymer, such as synthetic rubber and ethylene-vinyl acetate (EVA).

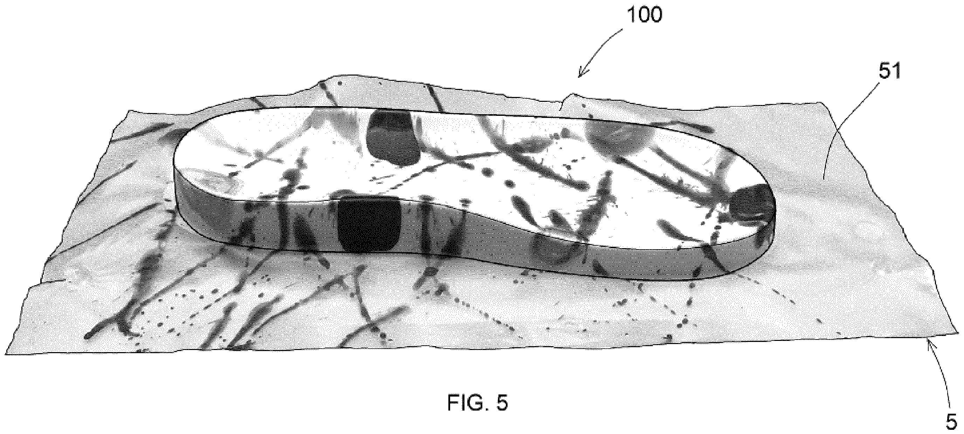

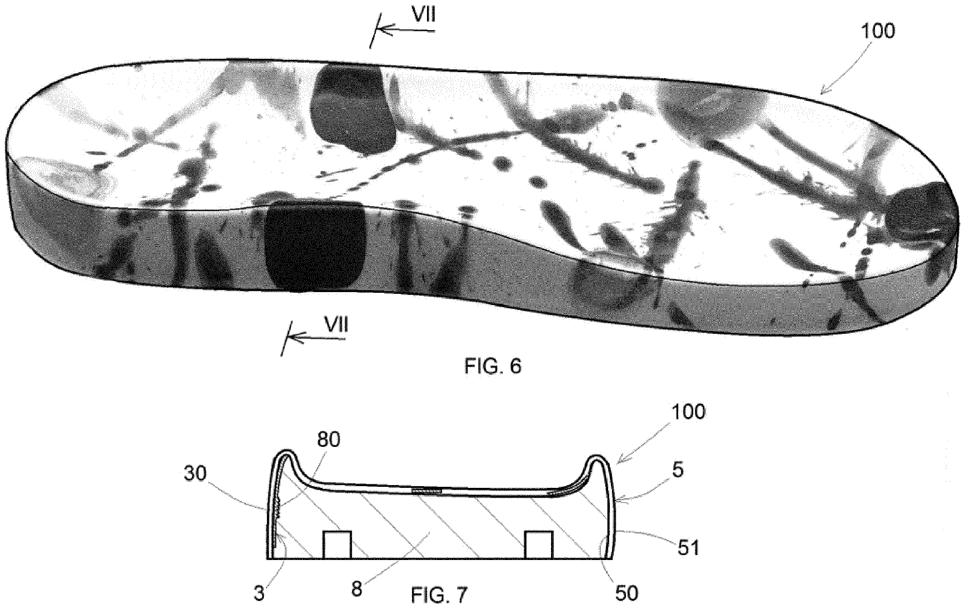

When the polymerization of the plastic material (8) in the mold (60) is completed, the mold (60) is opened and a molded, painted product (100) (Figs. 4 and 5) is extracted, in an unfinished condition because waste portions (55) of the sheet externally protrude from the plastic material (8). Such a product (100) can be a footwear sole or bottom. The unfinished sole is trimmed and waste portions (55) are cut by means of cutting devices (9), such as blades, in such a way to obtain a finished sole, such as the one of Fig. 6.

With reference to Fig. 7, the product (100) obtained with the process according to the invention is a sole and has a body of molded plastic material (8) wherein a sheet (5) of transparent plastic material is applied, comprising a first side (50) facing the body of the sole and a second side (51) facing the exterior. The first side (50) of the sheet (5) has a layer of paint (3) comprising stripes and spots. In particular, the layer of paint (3) comprises a portion (30) shaped like a spot in correspondence of an edge of the sole that may cover any surface imperfections (80) of the plastic body of the sole.

The fact that the sheet (5) is made of a transparent plastic material makes the layer of paint (3) perfectly visible. Moreover, the sheet (5) of transparent material protects the layer of paint (3) and acts as a protection cover of the layer of paint (3). Furthermore, the layer of paint (3) can have portions with high thickness (higher than 0.5 mm) that cover the surface imperfections of the plastic body of the sole.

The sole has an upper surface, a tread and a lateral edge.

If the sole is used for a shoe with upper, wherein the upper surface of the sole is not visible, the side (50) of the sheet with the layer of paint (3) covers the tread and the lateral edge of the sole.

Instead, if the sole is used for a shoe without upper, such as slippers, sandals and the like, the upper surface of the sole is visible. In such a case, the side (50) with the layer of paint (3) covers the upper surface and the lateral edge of the sole.

As shown in Fig. 8, if two sheets (5, 5') are used, the side with the layer of paint (50) of the two sheets completely covers the sole.

## Claims

1. Manufacturing process of a molded painted product comprising the following steps:
- providing a sheet (5) of a transparent plastic material with a first side (50) and a second side (51), wherein the first side (50) of the sheet has been painted by applying a layer of paint (3),
- arranging the sheet (5) in a cavity (61) of a mold (60) with the second side (51) without the layer of paint (3) directed towards the cavity (61) of the mold,
- fixing the sheet (5) on the mold (60),
- injecting or pouring a plastic material (8) in the cavity (61) of the mold, in such a way that the plastic material (8) adheres to the first side (50) of the sheet with the layer of paint (3),
- extracting the air from the cavity (61) of the mold to generate a vacuum in such a way that the second side (51) of the sheet without the layer of paint (3) adheres to the cavity of the mold; wherein said step of extracting can be performed before, after or during the step of injection or pouring,
- polymerization of the plastic material (8) in the closed mold,
- opening the mold and extracting a product (100) provided with a body of molded plastic material (8) from the mold, wherein the first side (50) of the sheet with the layer of paint (3) adheres to the body of the product and the second side (51) of the sheet is directed outwards,
- providing a second sheet (5') of a transparent plastic material with a first side (50) and a second side (51), wherein the first side (50) of the second sheet has been painted by applying a layer of paint (3),
- arranging the second sheet (5') on a lid (62) of the mold with the second side (51) without the layer of paint (3) directed toward the lid (62) of the mold,
- fixing the second sheet (5') on the lid (62) of the mold,
- pouring the plastic material (8) in the cavity (61) of the mold,
- extracting the air from the lid (62) of the mold to generate a vacuum in such a way that the second side (51) of the second sheet without the layer of paint (3) adheres to the lid of the mold; wherein said step of extracting can be performed before, after or during the step of pouring.

2. The process of claim 1, wherein said product (100) is a footwear sole with an upper surface, a tread and a lateral edge.

3. The process of claim 2, wherein said side (50) with the layer of paint (3) covers the tread and the lateral edge of the sole.

4. The process of claim 2, wherein said side (50) with the layer of paint (3) covers the upper surface and lateral edge of the sole.

5. The process of any one of the preceding claims, wherein said layer of paint (3) comprises stripes and/or spots and/or patches and/or texts and/or logos and/or trademarks and/or a uniform layer.

6. The process of any one of the preceding claims, wherein said layer of paint (3) is multi-color.

7. The process of any one of the preceding claims, wherein said layer of paint (3) has portions with a thickness higher than or equal to 0.5 mm.

8. The process of any one of the preceding claims, wherein said layer of paint (3) comprises polyurethane and/or acrylic paints.

9. The process of any one of the preceding claims, comprising the following steps:
- painting a film (10) of transparent plastic material that is unwound from a roll (1) and
- cutting the painted film in such a way to obtain said sheet (5, 5') with the layer of paint (3) on the first side (50).

10. The process of any one of claims 1 to 8, comprising the following steps::
- cutting a film (10) of transparent plastic material that is unwound from a roll (1) in such a way to obtain transparent sheets, and
- painting one side of said transparent sheets in such a way to obtain said sheet (5, 5') with the layer of paint (3) on the first side (50).

11. The process of any one of the preceding claims, wherein said sheet (5, 5') is made of polyethylene.

12. The process of any one of the preceding claims, comprising the application of decorative elements (7), such as strass, studs, metal strips and the like, on said first side (50) of the sheet.

## Patentansprüche

1. Verfahren zur Herstellung eines geformten und bemalten Produkts, umfassend die folgenden Schritte:
- Bereitstellen einer Folie (5) aus transparentem Kunststoff mit einer ersten Seite (50) und einer zweiten Seite (51), wobei die erste Seite (50) der Folie durch Aufbringen einer Farbschicht (3) bemalt wurde,
- Anordnen der Folie (5) in einem Hohlraum (61) eines Formwerkzeugs (60) derart, dass die zweite Seite (51), die keine Farbschicht (3) aufweist, dem Hohlraum (61) des Formwerkzeugs zugewandt ist,
- Befestigen der Folie (5) auf dem Formwerkzeug (60),
- Spritzgießen oder Gießen von Kunststoff (8) in den Hohlraum (61) des Formwerkzeugs, derart, dass der Kunststoff (8) an der ersten Seite (50) der Folie anhaftet, die die Farbschicht (3) aufweist,
- Absaugen der Luft aus dem Hohlraum (61) des Formwerkzeugs zur Erzeugung eines Vakuums, derart, dass die zweite Seite (51) der Folie, die keine Farbschicht (3) aufweist, an dem Hohlraum des Formwerkzeugs anhaftet; wobei der Schritt des Absaugens vor, während oder nach dem Spritzgießen oder Gießen vorgenommen werden kann,
- Polymerisieren des Kunststoffs (8) in dem geschlossenen Formwerkzeug,
- Öffnen des Formwerkzeugs und Entnehmen aus dem Formwerkzeug eines Gegenstandes (100) mit einem Körper aus geformtem Kunststoff (8), wobei die erste Seite (50) der Folie, die die Farbschicht (3) aufweist, an dem Körper des Gegenstandes anhaftet, und die zweite Seite (51) der Folie nach außen gewandt ist,
- Bereitstellen einer zweiten Folie (5') aus transparentem Kunststoff mit einer ersten Seite (50) und einer zweiten Seite (51), wobei die erste Seite (50) der zweiten Folie durch Aufbringen einer Farbschicht (3) bemalt wurde,
- Anordnen der zweiten Folie (5') auf einem Deckel (62) des Formwerkzeugs derart, dass die zweite Seite (51), der zweiten Folie, die keine Farbschicht (3) aufweist, dem Deckel (62) des Formwerkzeugs zugewandt ist,
- Befestigen der zweiten Folie (5') auf dem Deckel (62) des Formwerkzeugs,
- Gießen des Kunststoffs (8) in den Hohlraum (61) des Formwerkzeugs,
- Absaugen der Luft aus dem Deckel (62) des Formwerkzeugs zur Erzeugung eines Vakuums, derart, dass die zweite Seite (51) der zweiten Folie, die keine Farbschicht (3) aufweist, an dem Hohlraum des Formwerkzeugs anhaftet; wobei der Schritt des Absaugens vor, während oder nach dem Gießen vorgenommen werden kann.

2. Verfahren nach Anspruch 1, wobei der Gegenstand (100) eine Schuhsohle mit einer oberen Oberfläche, einer Lauffläche und einer seitlichen Kante ist.

3. Verfahren nach Anspruch 2, wobei die Seite (50), die die Farbschicht (3) aufweist, die Lauffläche und die seitliche Kante der Sohle bedeckt.

4. Verfahren nach Anspruch 2, wobei die Seite (50), die die Farbschicht (3) aufweist, die obere Oberfläche und die seitliche Kante der Sohle bedeckt.

5. Verfahren nach einem der vorstehenden Ansprüche, wobei die Farbschicht (3) Streifen und/oder Punkte und/oder Flecken und/oder Texte und/oder Logos und/oder Marken und/oder eine gleichmäßige Schicht umfasst.

6. Verfahren nach einem der vorstehenden Ansprüche, wobei die Farbschicht (3) mehrere Farben aufweist.

7. Verfahren nach einem der vorstehenden Ansprüche, wobei die Farbschicht (3) Abschnitte mit einer Dicke größer oder gleich 0,5 mm aufweist.

8. Verfahren nach einem der vorstehenden Ansprüche, wobei die Farbschicht (3) Polyurethan- und/oder Acrylfarben umfasst.

9. Verfahren nach einem der vorstehenden Ansprüche, umfassend die folgenden Schritte:
- Bemalen einer transparenten Kunststoffbahn (10), die von einer Spule (1) abgerollt wird, und
- Zuschneiden der bemalten Bahn, um die Folie (5, 5') zu erhalten, die die Farbschicht (3) auf der ersten Seite (50) aufweist.

10. Verfahren nach einem der Ansprüche von 1 bis 8, umfassend die folgenden Schritte:
- Zuschneiden einer transparenten Kunststoffbahn (10), die von einer Spule (1) abgerollt wird, um transparente Folien zu erhalten, und
- Bemalen einer Seite der transparenten Folien, um die Folie (5; 5') zu erhalten, die die Farbschicht (3) auf der ersten Seite (50) aufweist.

11. Verfahren nach einem der vorstehenden Ansprüche, wobei die Folie (5; 5') aus Polyethylen besteht.

12. Verfahren nach einem der vorstehenden Ansprüche, umfassend das Aufbringen von Dekorationselementen (7) wie Strass, Nieten, Metallbänder o. ä. auf der ersten Seite (50) der Folie.

## Revendications

1. Processus pour la réalisation d'un objet moulé et vernis comprenant les étapes suivantes :
- agencement d'une feuille (5) en matériel plastique transparent ayant une première face (50) et une seconde face (51), où la première face (50) de la feuille a été vernie avec l'application d'une couche de peinture (3),
- disposition de la feuille (5) dans une cavité (61) d'un moule (60) avec la seconde face (51), dépourvue de la couche de peinture (3), orientée vers la cavité (61) du moule,
- blocage de la feuille (5) sur le moule (60),
- injection ou coulée de matériel plastique (8) dans la cavité (61) du moule, de sorte que le matériel plastique (8) adhère à la première face (50) de la feuille sur laquelle il y a la couche de peinture (3),
- aspiration d'air de la cavité (61) du moule pour générer le vide de manière que la seconde face (51) de la feuille, dépourvue de la couche de peinture (3), adhère à la cavité du moule ; où ladite étape d'aspiration peut être effectuée avant, après ou pendant l'étape d'injection ou de coulée,
- polymérisation du matériel plastique (8) dans le moule fermé,
- ouverture du moule et extraction du moule d'un objet (100) ayant un corps de matériel plastique moulé (8), où la première face (50) de la feuille, sur laquelle il y a la couche de peinture (3), adhère au corps de l'objet et la seconde face (51) de la feuille est orientée vers l'extérieur,
- agencement d'une seconde feuille (5') de matériel plastique transparent ayant une première face (50) et une seconde face (51), où la première face (50) de la seconde feuille a été vernie avec l'application d'une couche de peinture (3),
- disposition de la seconde feuille (5') sur un couvercle (62) du moule avec la seconde face (51) de la seconde feuille, dépourvue de la couche de peinture (3), orientée vers le couvercle (62) du moule,
- blocage de la seconde feuille (5') sur le couvercle (62) du moule,
- coulée du matériel plastique (8) dans la cavité (61) du moule,
- aspiration d'air depuis le couvercle (62) du moule pour générer le vide de manière que la seconde face (51) de la seconde feuille, dépourvue de la couche de peinture (3), adhère au couvercle du moule ; où ladite étape d'aspiration peut être effectuée avant, après ou pendant l'étape de coulée.

2. Processus selon la revendication 1, où ledit objet (100) est une semelle d'usure pour chaussure ayant une surface supérieure, un intercalaire et un bord latéral.

3. Processus selon la revendication 2, où ladite face (50) avec la couche de peinture (3) revêt l'intercalaire et le bord latéral de la semelle d'usure.

4. Processus selon la revendication 2, où ladite face (50) avec la couche de peinture (3) revêt la surface supérieure et le bord latéral de la semelle.

5. Processus selon l'une quelconque des revendications précédentes, où ladite couche de peinture (3) comprend des rayures et/ ou des taches et/ou des maculatures et/ou des mots et/ou des logos et/ou des marques et/ou une couche uniforme.

6. Processus selon l'une quelconque des revendications précédentes, où ladite couche de peinture (3) a plusieurs couleurs.

7. Processus selon l'une quelconque des revendications précédentes, où ladite couche de peinture (3) a des portions ayant une épaisseur majeure ou égale à 0,5 mm.

8. Processus selon l'une quelconque des revendications précédentes, où ladite couche de peinture (3) comprend des vernis polyuréthane et/ou acryliques.

9. Processus selon l'une quelconque des revendications précédentes, comprenant les étapes suivantes :
- vernissage d'un film (10) de matériel plastique transparent déroulé depuis une bobine (1) et
- coupe du film vernis de manière à obtenir ladite feuille (5, 5') ayant la couche de peinture (3) sur la première face (50).

10. Processus selon l'une quelconque des revendications de 1 à 8, comprenant les étapes suivantes :
- coupe d'un film (10) de matériel plastique transparent déroulé depuis une bobine (1), de manière à obtenir des feuilles transparentes, et
- vernissage d'une face des dites feuilles transparentes de manière à obtenir ladite feuille (5; 5') ayant la couche de peinture (3) sur la première face (50).

11. Processus selon l'une quelconque des revendications précédentes, où ladite feuille (5, 5') est en polyéthylène.

12. Processus selon l'une quelconque des revendications précédentes, comprenant l'application d'éléments décoratifs (7), tels que strass, clous, bandes métalliques et similaires, sur ladite première face (50) de la feuille.
